# EUROPÄISCHE PATENTSCHRIFT

(11) **EP 0 794 048 B1**
(45) Veröffentlichungstag und Bekanntmachung des Hinweises auf die Patenterteilung: **26.06.2002**
(21) Anmeldenummer: 97103409.5
(22) Anmeldetag: 01.03.1997
(51) Int. Cl.: B29C 65/20

(54) **Vorrichtung zum Halten einer Schutzfolie auf einem Schweissspiegel**
Device for holding a protective film onto a welding mirror
Dispositif de maintien d'une feuille de protection sur un miroir de soudage

(30) Priorität: 04.03.1996 DE 19608155
(43) Veröffentlichungstag der Anmeldung: 10.09.1997
(73) Patentinhaber: Urban GmbH & Co. Maschinenbau KG, D-87700 Memmingen (DE)
(72) Erfinder: Günther, Konrad, 87727 Babenhausen (DE)
(74) Vertreter: Pfister, Helmut, Dipl.-Ing.

(56) Entgegenhaltungen:
- DE-A- 2 254 189
- DE-A- 4 242 904
- DE-A- 4 416 347
- DE-A- 19 529 852
- DE-U- 8 806 839
- DE-U- 9 104 065
- FR-A- 1 086 334
- GB-A- 697 466

## Beschreibung

Die Erfindung betrifft eine Vorrichtung zum Halten einer Folie in gespanntem Zustand auf dem Schweißspiegel einer Schweißmaschine für Kunststoffprofile.

Die Schweißspiegel von Maschinen zum Verschweißen von Kunststoffprofilen, beispielsweise zur Herstellung von Fensterrahmen, tragen eine Folie, die die Aufgabe hat, das Ablagern von Kunststoffresten auf dem Schweißspiegel zu verhindern. Die Folie besteht vorzugsweise aus einem teflonbeschichtetem Glasseidengewebe und deckt in der Regel den Schweißspiegel auf beiden Seiten ab. Zum Verbinden der Folienenden mit dem Schweißspiegel ist schon vorgeschlagen worden, diese Folienenden durch Leisten mit Federn festzuklemmen. Dies hat den Vorteil, daß durch einfaches Lösen der Federn bzw. durch einen Spreizvorgang das Folienende freigegeben werden kann. Hierbei ist es von Nachteil, daß diese Leisten die gleiche Temperatur aufweisen wie die Schweißspiegel. Diese Temperatur beträgt ungefähr 200 bis 240° C. Das Wechseln der Folie erfolgt durch eine Bearbeitungsperson, und es müssen Vorkehrungen getroffen werden, daß sich diese Person beim Wechseln der Folie nicht verletzt.

Aus der DE-OS 44 16 347 ist eine Vorrichtung zum Befestigen der Folie auf einem Schweißspiegel bekannt. Hierbei wird eine Leiste vorgesehen, die eine Vielzahl von Stiften aufweist, die den Schweißspiegel durchdringen. Diese Stifte durchdringen auch die Folienenden und halten diese ausreichend fest.

Bei längerem Maschinengebrauch ist ein häufiges Auswechseln der Folie unvermeidbar. Auf der Folie bilden sich Ablagerungen, und es tritt auch ein Verschleiß auf. Für das Verschweißen der Kunststoffprofile ist es wichtig, eine möglichst hohe Temperaturstabilität an der Schweißspiegeloberfläche zu erreichen. Doch durch zunehmende Ablagerungen auf dem teflonbeschichteten Foliengewebe ist diese Temperaturstabilität nicht mehr gegeben. Die Folien müssen deswegen schnell wechselbar ausgestaltet sein, wobei insbesondere nicht gewartet werden kann, bis der Schweißspiegel von einer Betriebstemperatur von über 200° C bis auf Raumtemperatur abgekühlt ist.

Es ist somit Aufgabe der Erfindung, eine Vorrichtung der eingangs vorgeschriebenen Gattung zum Halten der Folie auf einem Schweißspiegel gemäß den Merkmalen des Oberbegriffs des Anspruchs 1 weiterzuentwickeln, so daß ein sicherer Halt der Folie in gespanntem Zustand an dem Schweißspiegel erreicht, wird, wobei gleichzeitig auch ein rasches und sicheres Auswechseln der Folie gewährleistet ist.

Zur Lösung dieser Aufgabe geht die Erfindung aus von einer Vorrichtung der eingangs angegebenen Gattung. Die Erfindung ist dadurch gekennzeichnet, daß die Folie ein Tragelement aufweist, das mit Mitteln einer Schnellspannvorrichtung zusammenwirkt und die Folie auf dem Schweißspiegel hält gemäß den Merkmalen des kennzeichnenden Teils des Anspruchs 1. Im Falle, daß die Folie verschlissen ist, wird eine bereits vorbereitete neue Folie mit einem Tragelement an dem Schweißspiegel angebracht. Am vorderen Ende der Folie ist das Tragelement vorgesehen. Das Tragelement kann hierbei eine Ausgestaltung aufweisen, die es erlaubt, daß die Bedienungsperson nicht mit dem Schweißspiegel oder anderen heißen Elementen der Maschine in Berührung kommt. Auch die Schnellspannvorrichtung wird zum Beispiel durch ein Werkzeug oder einen entsprechenden Hebel gespannt oder gelöst. Auch diese Elemente weisen keinen direkten thermischen Kontakt mit dem Schweißspiegel auf, wodurch auch hier eine Verbrennungsgefahr für die Bedienungsperson nicht besteht. Es wird zum Beispiel vorgesehen, die Schnellspannvorrichtung nicht direkt an dem heißen Spiegel, sondern beispielsweise an der Spiegelhalterung maschinenseitig anzuordnen. Dadurch wird weiter die Verbrennungsgefahr reduziert.

In einer bevorzugten Ausgestaltung der Erfindung ist vorgesehen, die Schnellspannvorrichtung an dem Schweißspiegel anzuordnen. Bei einer solchen Ausgestaltung ist es möglich, die Schnellspannvorrichtung zum Beispiel im Rahmen einer größeren Wartung zusammen mit dem Schweißspiegel auszubauen. Auch kann dann die Schnellspannvorrichtung beispielsweise als Nachrüstelement ausgebildet sein, und es muß maschinenseitig keine Veränderung vorgenommen werden. Aufgrund der bewußt schlecht ausgebildeten Wärmeübergänge zwischen Tragelement und dem Schweißspiegel ist auch hierbei eine Verbrennungsgefahr für die Bedienungspersonen ausgeschlossen.

Erfindungsgemäß wird vorgeschlagen, daß eine Folie auf beiden Seiten des Schweißspiegels vorgesehen ist, das Tragelement bügelartig ausgestaltet ist und die Folie auf beiden Seiten des Schweißspiegels von dem Tragelement gehalten ist. Der Schweißspiegel wird beidseitig verwendet. Beispielsweise beim Zusammenschweißen eines Kuststoffensterrahmens wird der Schweißspiegel an der Gehrung eingesetzt, und die beiden miteinander zu verschweißenden Profile werden gleichzeitig von einem Schweißspiegel erwärmt. In der Regel erfolgt hierbei ein ungefähr gleichmäßiger Verbrauch der Folie auf der Vorder- und Rückseite des Schweißspiegels. Das Tragelement ist hierbei zum Beispiel bügelartig ausgestaltet, um die Folie auf beiden Seiten zu halten.

Hierbei ist es günstig, wenn die Spannvorrichtung auf beiden Seiten des Schweißspiegels an dem Tragelement angreift. Dabei wird eine gleichmäßige Bespannung des Schweißspiegels erreicht. Es kann aber auch vorgesehen werden, daß die Spannvorrichtung auf einer Seite angreift und die Folie auf der andern Seite von einem Halteelement gehalten ist.

In der bevorzugten Ausgestaltung der Erfindung ist vorgesehen, daß an dem Tragelement eine Einhakung vorgesehen ist, die mit der Schnellspannvorrichtung verbindbar ist, die Schnellspannvorrichtung im wesentlichen von einem Bolzen, einer Feder und einem Haltestift gebildet ist, der in die Einhakung greift und der Haltestift mit dem beweglich gelagerten Bolzen verbunden ist, der von der Feder in einer Festhaltestellung gehalten ist. Durch die Schnellspannvorrichtung wird erreicht, daß die Folie immer gespannt auf dem Schweißspiegel angeordnet ist. Mit der Verwendung der Schnellspannvorrichtung wird auch ein schnelles Wechseln der Folie ermöglicht. In der Festhaltestellung ist die Folie über den Schweißspiegel gespannt. Die gewählte Ausführung mit der Anordnung eines Bolzens, eines Haltestiftes und einer Feder ist eine kostengünstige Ausführung der Schnellspannvorrichtung mit einer optimalen Wirkung.

Des weiteren ist vorgesehen, daß der Haltestift auf beiden Seiten des Schweißspiegels je in eine Einhakung des Tragelements greift. Auf diese Weise greift die Spannvorrichtung an beiden Folienenden an und erhöht somit die Spannwirkung. Es kann hierbei auch vorgesehen sein, daß der Haltestift den Schweißspiegel durchdringt, der zum Beispiel in einer Bohrung geführt ist, oder aber daß zwei Haltestifte jeweils am Rand des Schweißspiegels vorgesehen sind, die die Folie halten.

Auch ist es günstig, wenn der Bolzen in einer Bohrung des Schweißspiegels geführt ist. Auf diese Weise wird eine vorteilhafte Lösung für die Lagerung des beweglich geführten Bolzens erreicht. Die Bohrung ist leicht in dem Schweißspiegel vorzusehen und verändert in keiner Weise die Temparatureigenschaften des Schweißspiegels. Auch kann eine Führung des Bolzens außerhalb des Schweißspiegels vorgesehen werden, insbesondere wenn die Spannvorrichtung nicht an dem Schweißspiegel sondern an der Maschinenhalterung oder dergleichen vorgesehen ist.

Es ist günstig, wenn ein Freigabehebel vorgesehen ist, der gegen die Kraft der Feder auf den Bolzen wirkt. Zum Entspannen der Vorrichtung, also zum Freigeben der Folie, ist ein Freigabehebel vorgesehen, der den Bolzen gegen die Kraft der Feder zurückschiebt und die Folie entspannt.

In der bevorzugten Ausführungsform der Erfindung ist vorgesehen, daß der Schweißspiegel aus mehreren, winklig zueinander angeordneten Schweißspiegelelementen besteht und die Schweißspiegelelemente von einer oder mehreren Folien bedeckt sind. Durch eine solche Ausgestaltung wird erreicht, daß durch einen einzigen Schweißvorgang auch relativ komplizierte Schweißungen, zum Beispiel an dem Kämpfer eines Fensters ausgeführt werden können. Auch hier besteht natürlich das Problem, daß ein Anhaften des Kunststoffes an der heißen Oberfläche vermieden werden soll. Die winklig angeordneten Schweißspiegelelemente weisen hierzu eine oder mehrere Folien auf.

Es ist von Vorteil, wenn die Folie durch die Schnellspannvorrichtung dicht an der Schweißspiegeloberfläche anliegt. Die Schnellspannvorrichtung weist eine entsprechende Ausbildung, zum Beispiel einen Niederhalter auf. Auf diesen Niederhalter oder eine entsprechende Vorrichtung wirkt letztendlich eine Kraft, die gegen den Spiegel gerichtet ist und so sicherstellt, daß die Folie dicht auf dem Schweißspiegel aufliegt. Dies gilt natürlich auch bei der Ausbildung des Schweißspiegels aus mehreren Schweißspiegelelementen. Durch richtiges Anliegen der Folie auf der Schweißspiegeloberfläche wird erreicht, daß die thermischen Eigenschaften genau bestimmbar sind. Für ein schnelles, rationelles und sicheres Verschweißen der Kunststoffprofile ist es wichtig, daß die notwendigen Temperaturen und Wärmemengen genau definierbar sind.

Auch ist es günstig, wenn für jedes Schweißspiegelelement ein Tragelement und eine Spannvorrichtung vorgesehen sind. Dadurch wird erreicht, daß die Folie für jedes Schweißspiegelelement, die zueinander winklig angeordnet sein können,optimal gespannt ist und eine optimale Anlage der Folie auf der Schweißspiegeloberfläche sichergestellt ist. Hierbei kann es günstig sein, wenn an einer Folie zwei oder mehr Halter vorgesehen sind, die je mit einer Spannvorrichtung zusammenwirken. Dabei kann zum Beispiel vorgesehen werden, daß die Wirkungen der Spannvorrichtungen einander ergänzen. Dies führt im Ergebnis zu einer optimal gespannten Folie, die dicht auf der Spiegeloberfläche anliegt.

In der bevorzugten Ausgestaltung der Erfindung ist vorgesehen, daß der Rand der Folie umgeschlagen ist und dieser Umschlag das Tragelement aufnimmt. Der Umschlag wird beispielsweise durch eine Verbindung, zum Beispiel durch Verkleben, Verklammern oder Vernähen des umgeschlagenen Folienendes gebildet. Der durch den Umschlag gebildete Folienschlauch nimmt das Tragelement auf.

Auch ist es günstig, wenn die Folie einen Zuschnitt entsprechend der Ausgestaltung des Schweißspiegels aufweist. Insbesondere bei winklig ausgeführten Schweißspiegeln ist es von Vorteil, die Folie der Ausgestaltung des Schweißspiegels anzupassen. Hierbei ist zu beachten, daß ein Überlappen der Folie, insbesondere im Schweißbereich, vermieden werden soll. Durch eine doppelte Folienlage werden die thermischen Eigenschaften an der Schweißoberfläche derart beeinträchtigt, daß eine sichere und zuverlässige Verbindung der Profile nicht mehr sichergestellt ist.

Es ist günstig, wenn der Umschlag im Bereich der Einhakung der Tragelemente ausgespart ist. Das Tragelement wird in den schlauchförmigen Umschlag eingeführt und weist die Einhakung auf. Bei der Herstellung der Folie ist es günstig, wenn der Umschlag im Bereich der Einhakung ausgespart ist, damit die Einhakung von den Mitteln der Schnellspannvorrichtung optimal erfolgt und die Folie nicht behindert.

Auch ist es günstig, wenn bei winklig ausgestalteten Schweißspiegelelementen im Winkelbereich die Folie über die Höhe des Schweißspiegels eine Aussparung aufweist. Dadurch wird erreicht, daß die Folie nicht überlappt. Auch wird ein Auffalten, das zu einem Abstehen der Folie von dem Schweißspiegel im Winkelbereich führt, sicher vermieden.

Des weiteren sieht die Erfindung vor, daß das Tragelement einen Handgriff aufweist. Durch einen Handgriff ist es möglich, die Folie ideal auf den Schweißspiegel zu führen, ohne den heißen Schweißspiegel berühren zu müssen. Dies ist insbesondere beim Ausbauen der verbrauchten Folie von Vorteil.

In der Zeichnung ist die Erfindung schematisch dargestellt. Es zeigen:
- Fig. 1: eine Seitenansicht einer erfindungsgemäßen Vorrichtung,
- Fig. 2: eine Seitenansicht der Einzelteile der erfindungsgemäßen Vorrichtung,
- Fig. 3: eine Draufsicht auf die erfindungsgemäße Vorrichtung mit einem winklig ausgestalteten Schweißspiegel,
- Fig. 4: eine Seitenansicht der erfindungsgemäßen Vorrichtung,
- Fig. 5: eine Seitenansicht der erfindungsgemäßen Vorrichtung, wobei der Schweißspiegel aus mehreren winklig angeordneten Schweißelementen besteht,
- Fig. 6: eine weitere Ansicht gemäß Figur 5,
- Fig. 7: der Zuschnitt der Folie gemäß der erfindungsgemäßen Vorrichtung und
- Fig. 8: in einer Ansicht den Haltestift der erfindungsgemäßen Vorrichtung.

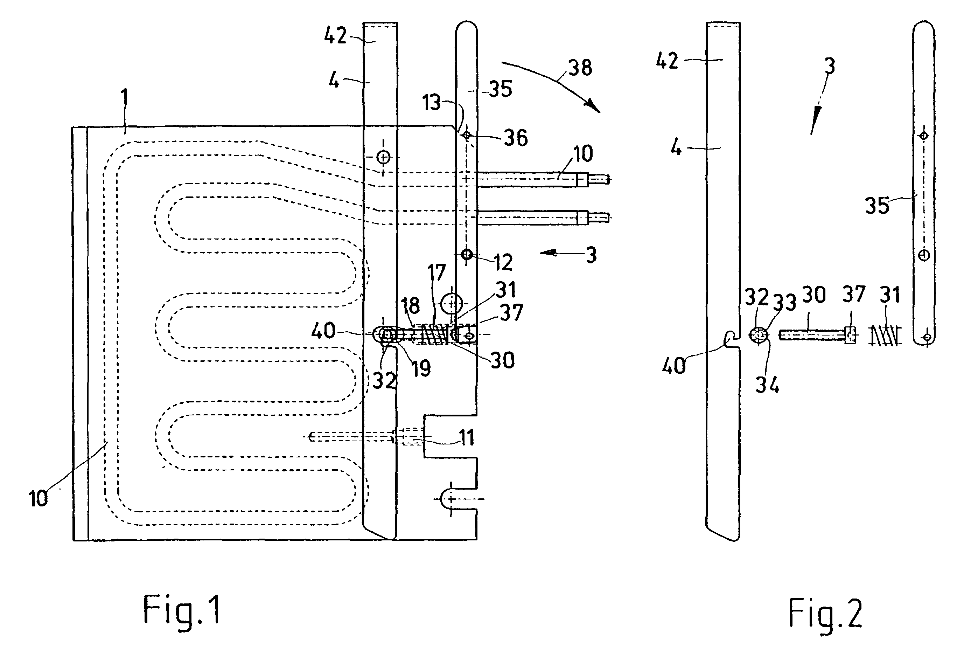

Die Fig. 1 ist in einer Seitenansicht einer erfindungsgemäßen Vorrichtung gezeigt. Der Schweißspiegel 1 dient zum Zusammenschweißen von Kunststoffprofilen, zum Beispiel zu Fenster, Fensterrahmen oder dergleichen. Hierzu ist eine Heizung 10 vorgesehen, die von einem Temperatursensor 11 gesteuert und geregelt ist. Die Oberfläche des Schweißspiegels 1 ist durch eine Folie 6 abgedeckt. Diese Folie, beispielsweise ein teflonbeschichtetes Seidengewebe oder dergleichen, dient dazu, daß der erwärmte Kunststoff nicht auf der heißen Metalloberfläche des Schweißspiegels anhaftet. Zum einen würde dadurch die Schweißspiegeloberfläche verschmutzt werden, zum anderen die Maßhaltigkeit der Rahmen durch die Entfernung des Materials beeinträchtigt werden. Obwohl die Folie 6 eine antihaftende Eigenschaft aufweist, kann diese trotzdem mit zunehmender Benutzung verschmutzen und verschleißen. Daraus resultiert ein Ersatz der Folie 6. An der Folie 6 ist ein Tragelement 4 vorgesehen. Es gibt verschiedene Möglichkeiten, das Tragelement 4 mit der Folie 6 zu verbinden, beispielsweise kann die Folie 6 an dem Tragelement 4 angeklebt oder angenietet sein. Das Tragelement 4 ist mit einer Schnellspannvorrichtung 3 verbindbar. Nicht in allen Darstellungen ist die Folie gezeigt, diese ist oftmals für die Übersichtlichkeit nicht dargestellt oder nur im Zusammenhang mit dem Tragelement 4 angedeutet.

Das Tragelement 4 erstreckt sich zum Beispiel über die ganze Höhe des Schweißspiegels 1 und unterstützt in diesem Bereich die Folie 6. In der Mitte des Tragelementes 4 ist eine Einhakung 40 vorgesehen. Es können auch mehrere Einhakungen vorgesehen sein, die an dem Tragelement verteilt sind. In diese Einhakung 40 wird der Haltestift 32 eingelegt. Der Haltestift 32 weist beispielsweise mittig eine radiale Bohrung 34 mit Gewinde 33 auf, in die der Bolzen 30 eindrehbar ist. Die Achse des Bolzens 30 bildet mit der Achse des Haltestiftes 32 einen rechten Winkel. Der Bolzen 30 weist einen Kopf 37 auf. Auf diesem Kopf 37 stützt sich die Feder 31 ab.

Wie in Fig. 1 gezeigt, ist der Bolzen 30 in einer Bohrung 17 des Schweißspiegels 1 geführt. Die Feder 31 stützt sich auf der einen Seite am Kopf des Bolzens 30 und am anderen Ende am Grund 18 der Bohrung 17 ab. Hierbei ist zu beachten, daß die Bohrung 17 unterschiedliche Durchmesser aufweist. Am Grund 18 der Bohrung setzt eine weitere Bohrung an, die den Bolzen aufnimmt und mit dem Haltestift 32 verbindet. Dadurch ist es möglich, daß die Feder 31 den Bolzen 30 und den damit verbundenen Haltestift 32 in der Festspannstellung nach rechts (gemäß Fig. 1) drückt.

Der Schweißspiegel 1 weist eine Durchbohrung 19 auf. Diese Durchbohrung 19 kann zum Beispiel als Langloch ausgeführt sein und ist rechtwinklig zur Bohrung 17 angeordnet. Die Durchbohrung 19 nimmt den Haltestift 32 auf. Bei dieser Ausgestaltung ist vorgesehen, daß der Haltestift 32 mit dem bügelartig (41) ausgebildeten Tragelement 4 auf beiden Seiten des Schweißspiegels zusammenwirkt. Wie dargestellt erfolgt das Spannen der Folie auf der Vorder- und Rückseite des Schweißspiegels durch eine jeweils gleichgerichtete Spannbewegung. Der Haltestift 32 überträgt diese Spannbewegung auf beide Seiten des Schweißspiegels.

Auch ist es möglich, daß der Haltestift 32 nicht in einer Durchbohrung 19 vorgesehen ist, sondern zum Beispiel zwei Haltestifte am oberen und unteren Rand des Schweißspiegels das Tragelement 4 mit der Schnellspannvorrichtung 3 verbinden. Bei einer solchen Ausgestaltung kann auf eine Durchbohrung verzichtet werden.

In der Festspannstellung, wie zum Beispiel in Fig. 1 gezeigt, drückt die Feder 31 das Tragelement 4 nach rechts. Für das Wechseln der Folie 6 ist ein Freigabehebel 35 vorgesehen. In Fig. 1 ist angedeutet, daß der Freigabehebel 35 um den Drehpunkt 12 des Schweißspiegels 1 in einem gewissen Winkelbereich schwenkbar ist. Dies ist durch den Schwenkpfeil 38 angedeutet. Bei einer entsprechenden Lösbewegung des Freigabehebels 35 um den Drehpunkt 12 wird das an dem Bolzen 30 liegende Ende des Freigabehebels 35 auf den Kopf 37 des Bolzens gedrückt. Diese Bewegung erfolgt gegen die Kraft der Feder 31. Aus einer Verschwenkbewegung gemäß dem Pfeil 38 resuliert somit ein Versatz des Bolzens 30 nach links, wodurch die gespannte Folie 6 entspannt wird. Es kann nun das Tragelement 4 an seiner Einhakung 40 von dem Haltestift 32 ausgehakt werden und die Folie 6 insbesondere mit dem handgriffähnlich ausgestalteten Ende 42 des Tragelementes 4 entnommen werden. Durch eine solche Ausgestaltung ist die Gefahr einer Verbrennung oder dergleichen stark reduziert.

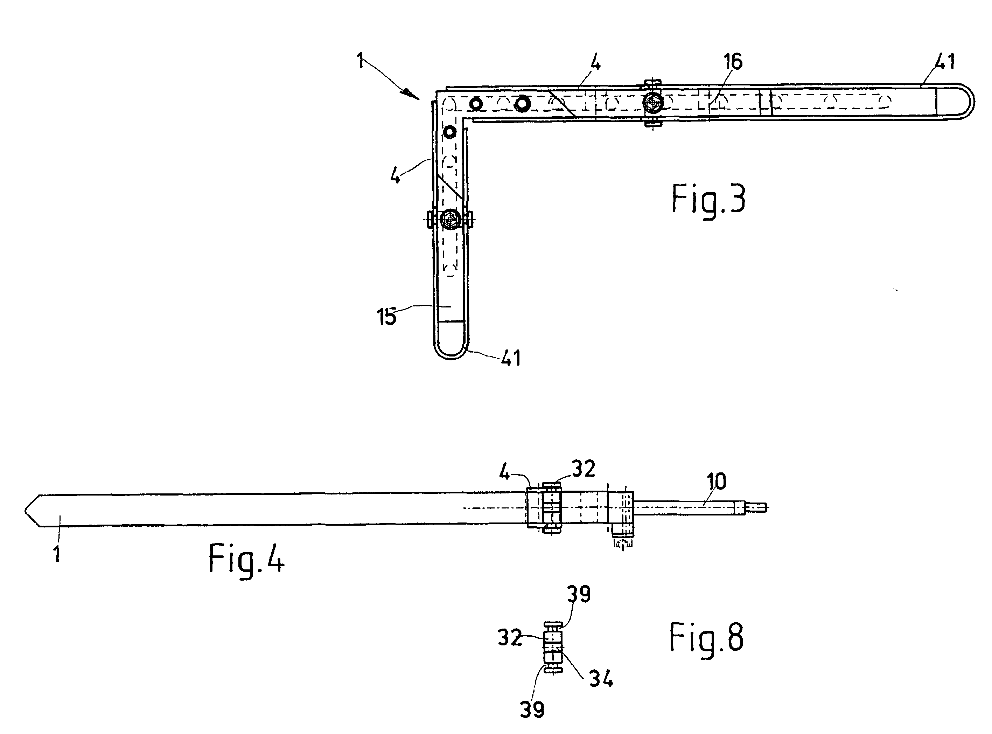

Das Einsetzen einer neuen Folie mit Hilfe des Tragelementes 4 erfolgt in umgekehrten Schritten. Der Freigabehebel wird wiederum gemäß des Pfeiles 38 geschwenkt, um das Einfädeln des Haltestiftes 32 in die Einhakung 40 zu erleichtern. Aufgrund der Feder 31 wird der Freigabehebel zurückgeschwenkt und die Folie 6 fest auf dem Schweißspiegel aufgespannt. Die Rückschwenkbewegung des Freigabehebels 35 wird durch einen Stift 36 des Freigabehebels 35 begrenzt, der an einer Anschlagfläche 13 des Schweißspiegels 1 anliegt. In Fig. 4 ist angedeutet, wie der Haltestift 32 das Tragelement 4 auf beiden Seiten des Schweißspiegels 1 festhält. In Fig. 4 ist die Schnellspannvorrichtung 3 nicht separat angedeutet, diese kann sich beispielsweise an der Schweißmaschine befinden, zum Beispiel an dem Träger des Schweißspiegels oder dergleichen.

Für das Zusammenwirken mit der Einhakung 40 des Tragelementes 4 weist der Haltestift 32 an seinen Enden jeweils eine Umfangsnut 39 auf. Die Umfangsnut 39 weist hierbei eine Breite auf, die größer ist als die Dicke des Tragelementes 4.

In Fig. 3 ist angezeigt, daß der Schweißspiegel 1 aus mehreren winklig zueinander angeordneten Schweißspiegelelementen 15 und 16 aufgebaut sein kann. Hierbei ist es insbesondere von Vorteil, daß dieses winklig ausgestaltete Schweißspiegelelement 1 von einer Folie bedeckt ist. Für ein optimales Festhalten der Folie 6 auf diesem Schweißspiegel 1 ist vorgesehen, daß jedes Schweißspiegelelement 15 und 16 ein eigenes Tragelement 45 und 46 aufweist.

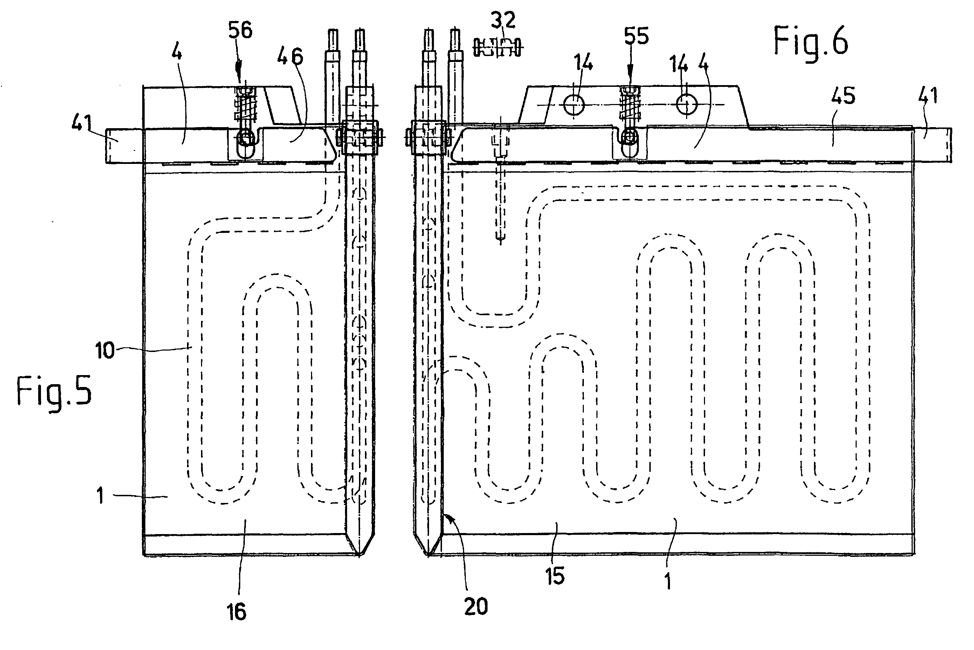

In Fig. 5 und 6 ist gezeigt, daß für jedes Tragelement 45,46 eine eigene Schnellspannvorrichtung 55,56 vorgesehen ist. Der Aufbau dieser Schnellspannvorrichtung ist der gleiche wie vorbeschrieben. Es ist hierbei auf eine separate Anordnung eines Freigabehebels verzichtet worden. Zum Lösen der Schnellspannvorrichtung 55,56 werden Werkzeuge, beispielsweise ein Schraubenzieher oder dergleichen, verwendet, die gegen die Kraft der Feder 31 den Bolzen 30 zurückdrücken und somit das Tragelement 45,46 freigeben.

In Fig. 6 ist angedeutet, daß der Schweißspiegel 1 mit Hilfe der Befestigungsösen 14 an dem Gestell der Schweißmaschine oder dergleichen befestigt werden kann.

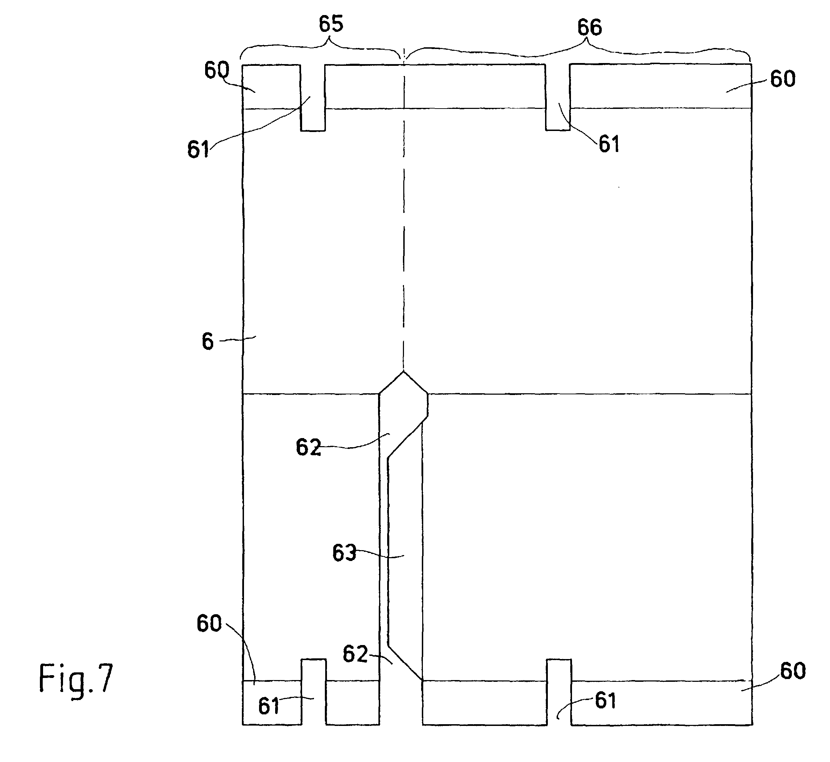

In Fig. 7 ist in dem Zuschnittplan die Folie 6 dargestellt. Die Folie 6 ist zum Beispiel ein teflonbeschichtetes Glasseidengewebe oder dergleichen. Dieses Material zeichnet sich dadurch aus, daß der erhitzte Kunststoff nur schlecht auf diesem Material haftet. Die in Fig. 7 gezeigte Folie 6 ist für einen winklig ausgestalteten Schweißspiegel vorgesehen.

Die Folie 6 ist aufgeteilt in zwei Folienteile 65 und 66, wobei das Folienteil 65 das Schweißspiegelelement 15 und das Folienteil 66 das Schweißspiegelement 16 abdeckt.

Erfindungsgemäß ist vorgeschlagen, einen Umschlag 60 vorzusehen, der das Tragelement 4 aufnimmt. Dieser Umschlag 60 wird zum Beispiel durch das Vernähen des umgeschlagenen Folienendes gebildet. Es kann auch ein Verklammern oder Verkleben erfolgen.

In die schlauchartig ausgestalteten Umschläge 60 werden die Tragelemente 4 eingeführt. Diese Tragelemente 4 weisen die Einhakungen 40 auf, an denen die Schnellspannvorrichtung 3 durch den Haltestift 32 angreift. Damit die Folie 6 nicht behindert wird, weist der Umschlag 60 daher im Bereich 40 Aussparungen 61 auf.

Für ein optimales Anliegen der Folie 6 auf der Schweißspiegeloberfläche von winklig zusammengesetzten Schweißspiegelelementen 15,16 ist vorgesehen, daß die Folie 6 im Winkelbereich 20, also in dem Bereich, an dem die Schweißspiegelelemente 15 und 16 aneinanderstoßen, eine Aussparung 62 über die ganze Höhe des Schweißspiegels 1 aufweist. Durch die Aussparung 62 wird erreicht, daß sich keine Falten im Winkelbereich 20 bilden, wodurch ein guter thermischer Kontakt mit dem Schweißspiegel einerseits und dem Kunststoffprofil andererseits beeinträchtigt würde. Durch die Aussparung 62 wird auch erreicht, daß in weiten Bereichen keine doppelte Folienlage vorliegt. Eine solche Ausgestaltung würde ebenfalls die thermischen Eigenschaften unkontrollierbar beeinflussen. Für ein sicheres Anliegen ist vorgesehen, daß die Folie 6 im Zuschnitt einen Lappen 63 aufweist, der in die Aussparung 62 vorsteht und nach der Montage zum Teil unter das Folienteil 65 geschoben wird. Dadurch wird ein sicheres Anliegen des Folienteils 66 im Winkelbereich 20 erreicht, wobei der Lappen 63 so groß ausgestaltet ist, daß eine optimale Verschweißung aufgrund von doppellagigen Folien beeinträchtigt wird.

Die jetzt mit der Anmeldung und später eingereichten Ansprüche sind Versuche zur Formulierung ohne Präjudiz für die Erzielung weitergehenden Schutzes.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

## Patentansprüche

1. Vorrichtung zum Halten einer Folie (6) in gespanntem Zustand auf dem Schweißspiegel (1) einer Schweißmaschine für Kunststoffprofile, **dadurch gekennzeichnet, daß** die Folie (6) mit einem Tragelement (4) verbunden ist, das mit Mitteln (32) einer Schnellspannvorrichtung (3) zusammenwirkt und die Folie (6) auf dem Schweißspiegel (1) spannt und in gespanntem Zustand hält.

2. Vorrichtung nach Anspruch 1, **dadurch gekennzeichnet, daß** die Schnellspannvorrichtung (3) an dem Schweißspiegel (1) vorgesehen ist.

3. Vorrichtung nach einem oder beiden der vorhergehenden Ansprüche, **dadurch gekennzeichnet, daß** eine Folie (6) auf beiden Seiten des Schweißspiegels (1) vorgesehen ist und das Tragelement (4) bügelartig (41) ausgestaltet ist und die Folie (6) auf beiden Seiten des Schweißspiegels (1) von dem Tragelement (4) gehalten ist.

4. Vorrichtung nach einem oder mehreren der vorhergehenden Ansprüche, **dadurch gekennzeichnet, daß** die Spannvorrichtung (3) auf beiden Seiten des Schweißspiegels (1) an dem Tragelement (4) angreift.

5. Vorrichtung nach einem oder mehreren der vorhergehenden Ansprüche, **dadurch gekennzeichnet, daß** an dem Tragelement (4) eine Einhakung (40) vorgesehen ist, die mit der Schnellspannvorrichtung (3) verbindbar ist, und die Schnellspannvorrichtung (3) im wesentlichen von einem Bolzen (30), einer Feder (31) und einem Haltestift (32) gebildet ist, der in die Einhakung (40) greift, und mit dem beweglich gelagertem Bolzen (30) verbunden ist, der von der Feder (31) in einer Festhaltestellung gehalten ist.

6. Vorrichtung nach einem oder mehreren der vorhergehenden Ansprüche, **dadurch gekennzeichnet, daß** der Haltestift (32) auf beiden Seiten des Schweißspiegels (1) je in eine Einhakung (40) des Tragelements (4) greift.

7. Vorrichtung nach einem oder mehreren der vorhergehenden Ansprüche, **dadurch gekennzeichnet, daß** der Bolzen (30) in einer Bohrung (17) des Schweißspiegels (1) geführt ist.

8. Vorrichtung nach einem oder mehreren der vorhergehenden Ansprüche, **dadurch gekennzeichnet, daß** ein Freigabehebel (35) vorgesehen ist, der gegen die Kraft der Feder (31) auf den Bolzen (30) wirkt.

9. Vorrichtung nach einem oder mehreren der vorhergehenden Ansprüche, **dadurch gekennzeichnet, daß** der Schweißspiegel (1) aus mehreren, winklig zueinander angeordneten Schweißspiegelelemente (15, 16) gebildet sind und diese von einer oder mehreren Folien bedeckt sind.

10. Vorrichtung nach einem oder mehreren der vorhergehenden Ansprüche, **dadurch gekennzeichnet, daß** die Folie (6) durch die Schnellspannvorrichtung (3) dicht an der Schweißspiegeloberfläche anliegt.

11. Vorrichtung nach einem oder mehreren der vorhergehenden Ansprüche, **dadurch gekennzeichnet, daß** für jedes Schweißspiegelelement (15, 16) ein Tragelement (45, 46) und eine Spannvorrichtung (55, 56) vorgesehen sind.

12. Vorrichtung nach einem oder mehreren der vorhergehenden Ansprüche, **dadurch gekennzeichnet, daß** der Rand der Folie (6) umgeschlagen ist und dieser Umschlag (60) das Tragelement (4) aufnimmt.

13. Vorrichtung nach einem oder mehreren der vorhergehenden Ansprüche, **dadurch gekennzeichnet, daß** die Folie (6) einem Zuschnitt entsprechend der Ausgestaltung des Schweißspiegels (1) aufweist.

14. Vorrichtung nach einem oder mehreren der vorhergehenden Ansprüche, **dadurch gekennzeichnet, daß** der Umschlag (60) im Bereich der Einhakung (40) der Tragelemente (4)ausgespart (61) ist.

15. Vorrichtung nach einem oder mehreren der vorhergehenden Ansprüche, **dadurch gekennzeichnet, daß** bei winklig ausgestalteten Schweißspiegelelementen (15, 16) im Winkelbereich (29) die Folie (6) über die Höhe des Schweißspiegels (1) eine Aussparung (62) aufweist.

16. Vorrichtung nach einem oder mehreren der vorhergehenden Ansprüche, **dadurch gekennzeichnet, daß** das Tragelement (4) einen Handgriff (42) aufweist.

## Claims

1. Device for holding a foil (6) in a stretched condition on the welding reflector (1) of a welding machine for plastic profiles, **characterised in that** the foil (6) is connected with a bearing element (4) which acts together with a means (32) of a quick clamping device (3) and stretches the foil (6) on the welding reflector (1) and holds it in a stretched condition.

2. Device according to claim 1, **characterised in that** the quick clamping device (3) is provided at the welding reflector (1).

3. Device according to one or both of the preceding claims, **characterised in that** a foil (6) is provided on both sides of the welding reflector (1) and the bearing element (4) is designed like a bow (41) and the foil (6) is held on both sides of the welding reflector (1) by the bearing element (4).

4. Device according to one or more of the preceding claims, **characterised in that** the clamping device (3) catches the bearing element (4) on both sides of the welding reflector (1).

5. Device according to one or more of the preceding claims, **characterised in that** a hooking-in element (40) is provided at the bearing element (4) which can be connected with the quick clamping device (3), and the quick clamping device (3) consists essentially of a stud (30), a spring (31) and a retention pin (32) which engages in the hooking-in element (40) and is connected with the stud (30) run movably on bearings, which is held by the spring (31) in a locking position.

6. Device according to one or more of the preceding claims, **characterised in that** the retention pin (32) engages on both sides of the welding reflector (1) in one hooking-in element (40) each of the bearing element (4).

7. Device according to one or more of the preceding claims, **characterised in that** the stud (30) is guided in a boring (17) of the welding reflector (1).

8. Device according to one or more of the preceding claims, **characterised in that** a release lever (35) is provided which acts against the power of the spring (31) onto the stud (30).

9. Device according to one or more of the preceding claims, **characterised in that** the welding reflector (1) consists of several welding reflector elements (15, 16) situated angularly to each other and that these elements are covered by one or more foils.

10. Device according to one or more of the preceding claims, **characterised in that** the foil (6) sits close to the surface of the welding reflector by means of the quick clamping device (3).

11. Device according to one or more of the preceding claims, **characterised in that** for each welding reflector element (15, 16) a bearing element (45, 46) and a clamping device (55, 56) is provided.

12. Device according to one or more of the preceding claims, **characterised in that** the edge of the foil (6) is turned down and this turning-down (60) holds the bearing element (4).

13. Device according to one or more of the preceding claims, **characterised in that** the foil (6) has a blank according to the design of the welding reflector (1).

14. Device according to one or more of the preceding claims, **characterised in that** the turning-down (60) is left open (61) in the region of the hooking-in device (40) of the bearing elements (4).

15. Device according to one or more of the preceding claims, **characterised in that** with angularly designed welding reflector elements (15, 16) the foil (6) has a relief (62) in the region of the angle (29) over the height of the welding reflector (1).

16. Device according to one or more of the preceding claims, **characterised in that** the bearing element (4) has a handle (42).

## Revendications

1. Dispositif de maintien en tension d'une feuille (6) au-dessus d'une lame chauffante (1) d'une machine à souder des profilés en plastique **caractérisé en ce que** la feuille (6) est liée à un élément de support (4) qui agit avec des moyens (32) d'un système-tendeur rapide (3) en tendant la feuille (6) au-dessus de la lame chauffante (1) et en immobilisant cette feuille en état tendu.

2. Dispositif selon la revendication 1 **caractérisé en ce que** le système-tendeur rapide (3) est fixé sur la lame chauffante (1).

3. Dispositif selon l'une ou les deux revendications précédentes **caractérisé en ce que** la feuille (6) est située des deux côtés de la lame chauffante (1), **en ce que** l'élément de support (4) possède une forme arrondie (41) et **en ce que** la feuille (6) est maintenue des deux côtés de la lame chauffante (1) par cet élément de support (4).

4. Dispositif selon l'une ou plusieurs des revendications précédentes **caractérisé en ce que** le système-tendeur (3) est lié les deux côtés de la lame chauffante (1) à l'élément de support (4).

5. Dispositif selon l'une ou plusieurs revendications précédentes **caractérisé en ce que** l'élément de support (4) possède un crochet (40) qui peut être connecté au système-tendeur rapide (3) et **en ce que** ce système-tendeur rapide consiste essentiellement en un boulon (30), un ressort (31) et une goupille (32) qui se fixe sur le crochet (40) et est liée au boulon (30) mobile maintenu par le ressort (31) dans une position fixe.

6. Dispositif selon l'une ou plusieurs des revendications précédentes **caractérisé en ce que** la goupille (32) s'accroche dans deux crochets (40) de l'élément de support, chacun d'un côté de la lame chauffante (1).

7. Dispositif selon l'une ou plusieurs des revendications précédentes **caractérisé en ce que** le boulon (30) est guidé dans un perçage (17) de la lame chauffante (1).

8. Dispositif selon l'une des revendications précédentes **caractérisé en ce qu'**un levier libérateur (35) est prévu pour agir contre la force du ressort (31) sur le boulon (30).

9. Dispositif selon l'une ou plusieurs des revendications précédentes **caractérisé en ce que** la lame chauffante (1) comporte plusieurs lames chauffantes (15, 16), formant entre elles des angles et couvertes par plusieurs feuilles.

10. Dispositif selon l'une ou plusieurs des revendications précédentes **caractérisé en ce que** la feuille (6) s'appuie grâce au système-tendeur rapide (3) contre la surface de la lame chauffante.

11. Dispositif selon l'une ou plusieurs des revendications précédentes **caractérisé en ce qu'**un élément de support (45, 46) et un système-tendeur (55, 56) sont prévus pour chacune des lames chauffantes (15, 16).

12. Dispositif selon l'une ou plusieurs des revendications précédentes **caractérisé en ce que** le bord de la feuille (6) est replié et **en ce que** l'élément de support (4) est logé dans ce repliement (60).

13. Dispositif selon l'une ou plusieurs des revendications précédentes **caractérisé en ce que** la feuille (6) possède une découpe ajustée à la lame chauffante (1).

14. Dispositif selon l'une ou plusieurs des revendications précédentes **caractérisé en ce que** le repliement (60) possède une ouverture (61) au niveau du crochet 40 des éléments de support (4).

15. Dispositif selon l'une ou plusieurs des revendications précédentes **caractérisé en ce que** dans le cas de l'utilisation de plusieurs lames chauffantes (15, 16) formant un angle entre elles, la feuille (6) est découpée (62) au-dessus de la lame chauffante (1) au niveau de l'angle (29).

16. Dispositif selon l'une ou plusieurs des revendications précédentes **caractérisé en ce que** l'élément de support (4) possède une anse (42).
